# EUROPÄISCHE PATENTSCHRIFT

(11) **EP 0 829 405 B1**
(45) Veröffentlichungstag und Bekanntmachung des Hinweises auf die Patenterteilung: **25.06.2003**
(21) Anmeldenummer: 97250277.7
(22) Anmeldetag: 17.09.1997
(51) Int. Cl.: B60T 13/66, B60T 17/22

(54) **Verfahren zum Betrieb eines Bremssystems für Schienenfahrzeuge**
Operating method for the brake system of a railway train
Procédé de fonctionnement d'un système de freinage de véhicules ferroviaires

(30) Priorität: 17.09.1996 DE 19639981; 02.09.1997 DE 19739444
(43) Veröffentlichungstag der Anmeldung: 18.03.1998
(73) Patentinhaber: KNORR-BREMSE Systeme für Schienenfahrzeuge GmbH, 80809 München (DE)
(72) Erfinder: Schmidt, Diemar, Dipl.-Ing., 30952 Ronnenberg (DE); Manke, Gerhard, 30890 Barsinghausen (DE); Niederstadt, Jörg, Dr.-Ing., 30966 Hemmingen, Devese (DE)

(56) Entgegenhaltungen:
- DE-A- 4 339 570

## Beschreibung

Die Erfindung betrifft eine Bremseinrichtung für einen Zugverband gemäß dem Oberbegriff des Patentanspruches 1.

Nach der internationalen UIC-Norm ist für Schienenfahrzeuge eine vom Triebfahrzeug bis zum letzten angehängten Wagen geführte pneumatische Druckleitung vorgesehen. Bei einer Öffnung eines Führerbremsventiles im Triebfahrzeug eines Zugverbandes wird die Druckleitung entlüftet. Die gesamte Bremseinrichtung ist dabei so ausgelegt, daß beim Entlüften der Druckleitung die einzelnen Bremszylinder jedes Wagens betätigt werden. Über die Druckleitung wird jedoch nicht nur das Bremssignal in binärer Weise übertragen, sondern über den erzeugten zeitlichen Druckgradienten der Druckleitung kann auch das Maß der Bremswirkung dosiert werden. Über das pneumatische Druckmittel ist man hinsichtlich der Übertragung eines Bremssignales durch den gesamten Zugverband an die Schallgeschwindigkeit gebunden. Sind nun sehr lange Züge von beispielsweise einem Kilometer in Betrieb, so erreicht das Bremssignal bei einer pneumatischen Signalübertragung den letzten Wagen des Zugverbandes erst nach ca. 3 Sekunden. Dies führt dazu, daß die vorderen Wagen zuerst und die folgenden Wagen nachfolgend gebremst werden, was ein sogenanntes Auflaufen und damit ein Durchrutschen der vorderen Wagen bewirkt.

Bei sehr langen und entsprechend schweren Zügen und/oder bei der Überwindung von Steigungen sind oftmals eine Mehrzahl von Triebfahrzeugen innerhalb eines Zugverbandes notwendig. Der Zugverband besteht dann aus mehreren autarken und insoweit austauschbaren Zugeinheiten. Jede Zugeinheit ist aus mindestens einem Triebfahrzeug und mehreren daran angehängten Wagen aufgebaut. Bekanntermaßen werden auch bei einer solchen Mehrzahl von Triebfahrzeugen die Bremsventile der einzelnen Fahrzeuge über die gemeinsame Druckleitung synchronisiert. Hierbei spielt wegen der räumlichen Trennung der einzelnen Zugeinheiten im Zugverband die Laufzeit der pneumatischen Bremsbetätigungsbefehle eine erhebliche Rolle. Ebenfalls ist der Betrieb von Regelventilen zur Befüllung der Druckleitung im Zugverband zu synchronisieren, damit ein gleichmäßiges Befüllen der Druckleitung erfolgen kann.

Die Laufzeitnachteile einer pneumatischen Ansteuerung bzw. Synchronisation tritt bei einer über einen Datenbus elektronisch angesteuerten Bremseinrichtung gemäß DE-OS 43 39 570 nicht auf. Der hier beschriebene Datenbus geht von einem einzigen fest definierten Zentralmodul aus, das über den Datenbus mit Bremsmodulen kommuniziert, die einzelnen Bremskreisen zugeordnet sind. Diese busgesteuerte Bremseinrichtung ist für den Betrieb von Bremsen eines Einzelfahrzeuges ausgerichtet. Insoweit kommt diese Lösung für einen Zugverband wegen der dann auftretenden Konkurrenz der mehrfach vorzusehenden Zentralmodule je Zugeinheit, die wegen der beliebigen Zusammenstellbarkeit zu Zugverbänden autark sind, nicht in Betracht.

Bei der Zusammenstellung mehrerer Zugeinheiten zu einem Zugverband kommen auch entsprechend der Anzahl der Zugeinheiten mehrere Regelventile zum Einsatz. Diese haben wie oben erwähnt die Aufgabe, den Druck in der Druckleitung auf einen vorgegebenen Wert zu halten. Dafür ist je Druckregelventil ein ihm zugeordneter Kompressor vorgesehen. Bei Differenzen in der lstwertermittlung der einzelnen Druckregelventile, die durch bauteilbedingte Toleranzen in der Regelelektronik auftreten können, wird nun die Situation eintreten, daß ein Druckregelventil ständig bestrebt ist, den Druck in der Druckleitung abzusenken, wogegen ein anderes Druckregelventil bestrebt ist, die Druckleitung entsprechend des gemessenen niedrigen lstdruckwertes zu beaufschlagen. Dieses autarke Verhalten aller die Druckleitung befüllenden Druckregelventile führt zu einem unnützen Betrieb einzelner Druckregelventile und damit zu einem schnellen Verschleiß und hohem Energieverlust.

Der Erfindung liegt daher die Aufgabe zugrunde, eine Bremseinrichtung für einen aus einzelnen Zugeinheiten bestehenden Zugverband dahingehend zu verbessern, daß ein verzögerungsfreier Bremsvorgang erreicht wird und außerdem zur Reduzierung des Druckluftverbrauches ein unnützer Betrieb von zur Druckmittelbeaufschlagung der Druckleitung dienender Regelventile im Zugverband vermieden wird.

Die gestellte Aufgabe wird bei einer Bremseinrichtung der gattungsgemäßen Art erfindungsgemäß dadurch gelöst, daß zur synchronen Druckmittelbeaufschlagung der Druckleitung durch die Regelventile ein Zugbus in bidirektionaler Kommunikation mit einem Befehlsgerät steht, und daß zur synchronen Betätigung der Bremsen der Zugbus ebenfalls die Bremsventile im Zugverband ansteuert.

Das Wesen der Erfindung besteht darin, daß ein busmäßig orientiertes Bremssystem im Sinne der Erfindung für Zugverbände angewendet wird, wobei die an sich autarken Zugeinheiten nunmehr im Zugverband miteinander über den Zugbus synchron ansteuerbar sind. Damit können die Nachteile hinsichtlich der Synchronisation bei der pneumatischen Ansteuerung überwunden werden. Zusätzlich zu den Bremsventilen werden auch die Regelventile, welche zur Druckmittelbeaufschlagung der Druckleitung vorgesehen sind, über den Zugbus angesteuert. Es kann damit über bidirektionale Kommunikation zwischen einem Befehlsgerät und den einzelnen Regelventilen eine synchrone Funktion aller Regelventile im Zugverband erzielt werden. Bauteilbedingte Toleranzen der Regelventile sind insoweit kompensierbar. Dazu wird vorzugsweise die Regelelektronik genau eines Regelventils auch allen übrigen Regelventilen des Zugverbandes zugeordnet, wobei die Regelelektroniken der übrigen Regelventile außer Betrieb gesetzt sind. Ein unnützer Betrieb der ansonsten autark funktionierenden einzelnen Regelventile kann damit vermieden werden.

Eine weitere die Erfindung verbessernde Maßnahme sieht vor, daß das Befehlsgerät im Triebfahrzeug einer jeden Zugeinheit des Zugverbandes angeordnet ist und zur Weitergabe von Druckleitungsbeaufschlagungs- und Bremssignalen mit dem durch den Zugverband verlaufenden Zugbus verbunden ist, wobei genau ein Befehlsgerät (Master) für den Zugverband frei auswählbar ist, daß gegenüber den anderen Befehlsgeräten (Slave) steuerungshierarchisch übergeordnet ist. Durch diese Maßnahme wird eine Kollision in der Befehlsabgabe von mehreren im Zugverband vereinigten, den jeweiligen Zugeinheiten zugeordneten Befehlsgeräten vermieden. Somit kann immer nur ein Befehlsgerät (Master) die Befehlshoheit über den gesamten Zugverband ausüben. Durch die freie Wählbarkeit des Master-Befehlsgerätes ist ein Zugverband beliebig zusammenstellbar, ohne daß zunächst auf die Einbindung der Befehlsgeräte Rücksicht genommen werden muß.

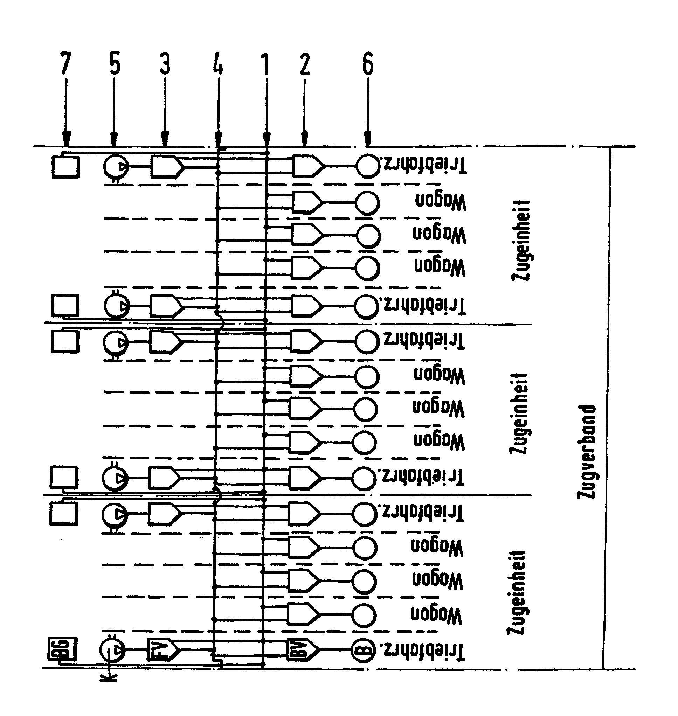

Ein bevorzugtes Ausführungsbeispiel der Erfindung ist in der einzigen Figur in Form einer Prinzipdarstellung gezeigt und wird im nachfolgenden näher beschrieben.

Durch den in der Figur dargestellten Zugverband, der aus drei Zugeinheiten besteht, ist ein Zugbus 1 geschleift. Über den Zugbus 1 werden adressierte Ansteuersignale ausgehend von einem frei als Master auswählbaren Befehlsgerät 7 gesendet. Die Ansteuersignale werden von den Bremsventilen 2 sowie von den Regelventilen 3 in Aktionen, d.h. Bremsen bzw. Druckmittelbeaufschlagung einer durch den Zugverband geschleiften Druckleitung 4, umgesetzt. In der hier gewählten Darstellung verfügt jede einzelne Zugeinheit1 über zwei eigene Kompressoren 5, die zur Befüllung der Druckleitung 4 dienen. Der Zugbus 1 kommuniziert also zum einen mit den jeweiligen Regelventilen 3 der Zugeinheiten und zum anderen auch mit deren Bremsventilen 2. Die Regelventile 3 regeln den Druckwert in der Druckleitung 4 auf vorzugsweise 5 bar aus. Gleichzeitig ist der Zugbus 1 auch mit den Bremsventilen 2 kommunizierend verbunden. Die Bremsventile 2 sind dafür verantwortlich, von der Druckleitung 4 gespeist, die Betätigung der Bremsen 6 zu steuern. Da die UIC-Norm vorschreibt, daß die Bremsen 6 bei Entlüftung der Druckleitung 4 betätigt werden müssen, gewährleistet die Druckleitung 4 außerdem eine Sicherheitsfunktion, wonach beim einem Bruch, beispielsweise infolge eines Abrisses des Zugverbandes, die Bremsen 6 selbständig betätigt werden. Die Bremsventile 2 werden bei Einleitung eines Bremsvorganges nicht willkürlich geöffnet, sondern die Öffnung kann über den Zugbus 1 zeitverzögemd gesteuert erfolgen. Durch die Synchronisation der einzelnen Bremsventile 2 im Zusammenhang mit der Synchronisation der Druckmitteibefüllung der Druckleitung 4 ist in erfindungsgemäßer Weise eine zeitlich saubere Steuerung eines Bremsvorganges speziell in einem Zugverband über den Zugbus 1 möglich.

### Bezugszeichenliste

- **1**: Zugbus
- **2**: Bremsventil
- **3**: Regelventil
- 4: Druckleitung
- **5**: Kompressor
- **6**: Bremse
- **7**: Befehlsgerät

## Patentansprüche

1. Bremseinrichtung für einen Zugverband, der aus mehreren Zugeinheiten mit je mindestens einem Triebfahrzeug und mehreren dazugehörigen Wagen besteht, deren druckmittelbetriebene Bremseinrichtungen je über ihnen zugeordnete Bremsventile (2) betätigbar sind, die dafür arbeitsdruckseitig mit der zugeordneten Bremse (6) und speisedruckseitig mit einer gemeinsamen Druckleitung (4) verbunden sind, die entlang des Zugverbandes verläuft und von mindestens einem je Zugeinheit vorgesehenem Regelventil (3) befüllbar ist, das mit mindestens einem ebenfalls je Zugeinheit vorgesehenen Kompressor (5) speisedruckseitig und mit der Druckleitung (4) arbeitsdruckseitig verbunden ist und wobei ferner ein elektronischer Zugbus (1) durch den Zugverband geschleift ist,
**dadurch gekennzeichnet,**
**daß** zur synchronen Druckmittelbeaufschlagung der Druckleitung (4) durch die Regelventile (3) der Zugbus (1) in bidirektionaler Kommunikation mit einem Befehlsgerät (7) steht, und daß zur synchronen Betätigung der Bremsen (6) der Zugbus (1) ebenfalls die Bremsventile (2) im Zugverband ansteuert.

2. Bremseinrichtung nach Anspruch 1,
**dadurch gekennzeichnet,**
**daß** die Regelelektronik genau eines Regelventils (3) auch allen übrigen Regelventilen des Zugverbandes zugeordnet ist, wobei die Regelkreise der übrigen Regelventile geöffnet sind.

3. Bremseinrichtung nach Anspruch 1 oder 2,
**dadurch gekennzeichnet,**
**daß** das Befehlsgerät (7) im Triebfahrzeug einer jeden Zugeinheit des Zugverbandes angeordnet ist und zur Weitergabe von Druckleitungsbeaufschlagungs- und Bremssignalen mit dem Zugbus (1) verbunden ist, wobei genau ein Befehlsgerät (7) als Master für den Zugverband auswählbar ist, welches gegenüber den anderen Befehlsgeräten (7) als Slave steuerungshierarchisch übergeordnet ist.

## Claims

1. Brake system for a train set composed of several train units including each at least one motor car and a plurality of associated cars, whose brake systems operated by a pressurised medium are adapted for being operated each via respective associated brake valves (2) that are connected, to this end, to the associated brake (6) on the working pressure side and to a common pressure line (4) on the feed pressure side extending along the train set and adapted to be charged by at least one regulator valve (3) provided per train unit, which regulator valve is connected, on the feed pressure side, to at least one compressor (5) equally provided per train unit and to the pressure line (4) on the working pressure side, with an electronic train data bus (1) being moreover looped through the train set,
**characterised in**
**that** for synchronised application of the pressurised medium to said pressure line (4) through said regulator valves (3), said train data bus (1) is in bidirectional communication with a command equipment (7), and that for synchronised application of the brakes (6), said train data bus (1) equally controls said brake valves (2) in the train set.

2. Brake system according to Claim 1,
**characterised in**
**that** the feedback control electronic system of precisely one regulator valve (3) is also associated with all the other regulator valves in the train set, with the closed-loop control circuits of the other regulator valves being opened.

3. Brake system according to Claim 1 or 2,
**characterised in**
**that** said command equipment (7) is disposed in the motor car of each train unit in the train set and is connected for said train data bus (1) for the transmission of pressure line pressurisation and brake signals, with the possibility to select precisely one command equipment unit (7) as master for the train set, which is of a higher order in terms of control hierarchy than the other command equipment units (7) as slaves.

## Revendications

1. Dispositif de freinage d'un convoi constitué de plusieurs rames ayant chacune au moins une locomotive et plusieurs wagons associés, dont les dispositifs de freinage à fluide comprimé peuvent être actionnés respectivement par des vannes (2) de freinage qui leur sont associées et qui communiquent à cet effet du côté de la pression de service avec le frein (6) associé et du côté de la pression de l'alimentation avec un conduit (4) commun de pression, qui court le long du convoi et qui peut-être rempli par au moins une vanne (3) de régulation qui est prévue pour chaque rame et qui communique du côté de la pression d'alimentation avec au moins un compresseur (5) prévu également pour chaque rame et du côté de la pression de service avec le conduit (4) de pression et dans lequel, en outre, le convoi glisse sur un bus (1) électronique de train,
**caractérisé**
**en ce que**, pour alimenter en synchronisme le conduit (4) de pression par du fluide sous pression par les vannes (3) de régulation, le bus (1) de train est en communication bidirectionnelle avec un appareil (7) qui donne des ordres et en ce que, pour l'actionnement en synchronisme des freins (6), le bus (1) de train commande également les vannes (2) de frein du convoi.

2. Dispositif de freinage suivant la revendication 1,
**caractérisé**
**en ce que** l'électronique de régulation, précisément d'une vanne (3) de régulation, est associée aussi à toutes les autres vannes de réglage du convoi, les circuits de régulation des autres vannes de régulation étant ouverts.

3. Dispositif selon la revendication 1 ou 2,
**caractérisé**
**en ce que** l'appareil (7) donnant des ordres est placé dans la locomotive de chaque rame du convoi et, pour transmettre des signaux d'alimentation du conduit de pression et de freinage, est relié au bus (1) de train, précisément un appareil (7) donnant des ordres pouvant être choisi comme maître pour le convoi et étant placé en une position hiérarchiquement supérieure du point vue de la commande par rapport aux autres appareils (7) donnant des ordres qui sont esclaves.
